(19) Europäisches Patentamt
European Patent Office
Office européen des brevets

(11) **EP 2 525 313 A1**

(12) **EUROPÄISCHE PATENTANMELDUNG**

(43) Veröffentlichungstag:
**21.11.2012 Patentblatt 2012/47**

(51) Int Cl.:
***G06Q 10/06*** *(2012.01)*

(21) Anmeldenummer: **12167820.5**

(22) Anmeldetag: **14.05.2012**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **14.05.2011 DE 102011101617**

(71) Anmelder: **manroland sheetfed GmbH
63075 Offenbach (DE)**

(72) Erfinder: **Hesper, Harald
55270 Jugenheim (DE)**

(74) Vertreter: **Stahl, Dietmar
Manroland sheetfed
Manufacturing GmbH
Mühlheimer Straße 341
DE-63075 Offenbach (DE)**

(54) **Verfahren zur Steigerung der Effizienz der Nutzung von Druckereieinrichtungen**

(57)     Zur Verbesserung von Prozessen bei der Verarbeitung von Bedruckstoffen und Druckerzeugnissen in einer Druckerei, bei der Herstellung von bogenförmigen Druckerzeugnissen in Bogendruckmaschinen sollen Datenwerte der Nutzung einer technischen Ausstattung (T) in Bezug auf die Produktionsstruktur, Datenwerte zur organisatorischen Situation (O) der Druckereieinrichtung und Datenwerte zu einem Qualifikationsstatus (P) des Druckpersonals ermittelt werden. Weiterhin werden Produktionsdaten als Messdaten zur Verfügbarkeit (V), zur Leistung (L) der Druckereieinrichtung und zur Qualität (Q) der Produktion bereitgestellt werden.

Die Effektivitätsdaten (T, O, P) und die Produktionsdaten (V, L, Q) werden miteinander so verknüpft, dass sich aus jeder Verknüpfung ein eigener Effektivitätsstatuswert ergibt.

Figur 2

EP 2 525 313 A1

**Beschreibung**

Die Erfindung betrifft ein Verfahren zur Steigerung der Leistung von Druckereieinrichtungen nach dem Oberbegriff von Anspruch 1.

Es ist weithin bekannt, in Druckereien elektronische oder computergesteuerte Einrichtungen zur Verbesserung der Abläufe bei der Nutzung der Druckereieinrichtungen wie Druckmaschinen, Bedruckstofflogistik, Bereitstellung von Arbeitsmaterialien wie Druckplatten und Druckfarben und anderer Dienste verfügbar zu machen.

So ist aus der EP 1 939 800 A1 eine Produktionsflusssteuerung für eine Druckerei bekannt, in der ein Verfahren zum prozessübergreifenden Transport von an Bedruckstoffe und Druckerzeugnisse gebundenen Daten den Bedruckstofftransport auf Transportpaletten in einer Bogen verarbeitenden Druckerei verbessern soll. Die Produktionsflusssteuerung soll mit Hilfe von RFID-Transpondern erfolgen, die an Transporthilfsmitteln für die Bogen bzw. die Bedruckstoffstapel angebracht sind. Da die Bedruckstofflogistik für Papier und Faltschachteln in Druckereien mit Bogendruckmaschinen und Bogenstanzmaschinen palettenorientiert erfolgt, sollen Transportpaletten mit Transpondern bestückt werden, die beschreibbar und auslesbar sind.

Damit können Fehler effizient vermieden werden. Ein typischer Fehlerfall ist, dass bei dem Auspacken eines Stapels aus der Schrumpffolie oder während der Stapellogistik der Stapelzettel, der die meisten der bedruckstoffrelevanten Daten beinhaltet, verloren geht. Der Bedruckstoffstapel ist dann nicht mehr oder nur unter einem hohen Aufwand zu identifizieren.

Wenn ein Druckauftrag in der Druckvorstufe angelegt wurde, werden dessen Daten per Datenleitung oder Datenträger an die Bogendruckmaschine übertragen. An der Bogendruckmaschine können dann noch die benötigten Bedruckstoffe in Form von Bedruckstoffdaten zugeordnet werden. Dann kann die Bogendruckmaschine bei einer fehlerhaften Bestückung mit Bedruckstoffen eine Meldung an den Bediener ausgeben und gegebenenfalls die Bogendruckmaschine stoppen. So wird vermieden, dass nicht dem aktuellen Auftrag zugeordnete Bedruckstoffe verarbeitet werden.

Ein weiterer Vorteil besteht darin, dass nach dem Druck in den meisten Fällen die Bedruckstoffstapel zwischengelagert werden müssen, bevor sie weiterverarbeitet werden können. Oftmals sind die Lagerflächen beschränkt, so dass Bedruckstoffstapel an verschiedenen Orten gelagert werden müssen. Wird der Drucksaal mit mehreren Lesegeräten ausgestattet, die eine Ortung aller zu einem Auftrag zugehörige Bedruckstoffstapel ermöglichen, kann zum Beispiel auf einem Lageplan der Druckerei angezeigt werden, wo die einzelnen Bedruckstoffstapel stehen, die zu einem Auftrag gehören. So wird erreicht, dass alle zu einem Auftrag gehörigen Bedruckstoffstapel aufgefunden werden können, auch wenn sie zwischenzeitlich aus einem beliebigen Grund bewegt wurden.

In Druckereien wird es vielfach als wünschenswert erachtet, z.B. bei der Bogenverarbeitung, ein Managementsystem zu haben, das einen Produktionsfluss von der Wareneinlagerung, über den Druck und eventuell darauf folgende Weiterverarbeitungsschritte, die sich einem Druckprozess anschließen, abbildet.

Es muss dabei zwischen informationsorientierten und entscheidungsorientierten Systemen unterschieden werden. Erstere werden meist in der Literatur als so genannte Open-loop-Systeme, letztere als so genannte Closed-loop-Systeme bezeichnet. In einem Open-loop-System werden anhand der in der Logistik ausgeführten Operationen die dabei umgesetzten Produktivitäten nachvollzogen. Die Daten können über eine Messung an den Produkten erfolgen, deren Informationen abgerufen werden. Alle in diesem Zusammenhang ablaufenden Vorgänge können anschließend analysiert werden, um eine Systemperformance bestimmen zu können. Damit sind in der Regel die Möglichkeiten erschöpft, das System ist lediglich auf Informationen ausgelegt. In den Open-loop-Systemen, die auch entscheidungsorientiert genannt werden, wird die gewonnene Information weiterverarbeitet, indem zusätzlich überprüft wird, ob und inwieweit eine so genannte Zielperformance erreicht wird. Anhand der dabei gefundenen Resultate werden Entscheidungen getroffen und ausgeführt, mit deren Hilfe die auszuführenden Operationen, falls nötig, im Hinblick auf die so genannte Zielperformance weiter verbessert werden können.

Durch intelligente Systeme können also Durchlaufzeiten, Lagerbestände, Risiken und Fehlerraten in einer Druckerei reduziert werden und gleichzeitig neue und flexiblere Produktionsansätze gewonnen werden.

Die Logistik in einer Bogen verarbeitenden Druckerei ist unter anderem dadurch gekennzeichnet, dass ein Anlegerstapel einer Bogendruckmaschine von Hand oder mit einem Stapler eingesetzt wird. Ein entsprechender Auslegerstapel der gleichen Bogendruckmaschine kann entsprechend ebenfalls von Hand oder mittels eines Staplers entfernt werden. Es ist aber auch bekannt, die Bedruckstoffstapel automatisiert zu den Bogendruckmaschinen zu transportieren und sie z.B. mittels Rollenbahnen zu- und abzuführen. Es sind daher beliebige Kombinationen der Beladung mit Bedruckstoffstapeln und des Abtransports von Bedruckstoffstapeln an Bogendruckmaschinen denkbar.

Die DE 10 2005 009 301 A1 schlägt vor Bedruckstoff- und druckerzeugnisgebundene Daten bei der Herstellung und dem Vertrieb von Druckerzeugnissen in einem Datenspeicher abzulegen, der direkt mit dem Bedruckstoff verbunden ist. Der Datenspeicher kann dabei in den Bedruckstoff integriert oder mit diesem verbunden sein. Der Vorteil dieses Verfahrens liegt darin, dass einzelne Ereignisse, die den Bedruckstoff betreffen, auf diesem gespeichert werden können. Dagegen sprechen die hohen Kosten der Transponder, die sich nur für besonders hochwertige oder Druckprodukte mit einem hohen Sicherheitsanforderungsprofil rechnen. Für die Massenproduktion sind solche mit dem Bedruckstoff verbundene Datenspeicher ökonomisch nicht darstellbar. Ein weiterer Nachteil dieses Verfahrens ist es, dass der Druckbogen nicht in allen Fällen komplett bedruckt werden kann, da der Datenspeicher direkt mit dem Bedruckstoff verbunden ist.

Weiterhin ist aus dem Zeitschriftenartikel "Den Leistungsprozess in Druckereien steigern", Druckspiegel 3/2010, Seiten 34 bis 35 bekannt, dass eine Produktivitätssteigerung durch effizientere und bessere Maschinennutzung hinsichtlich der vorhandenen Technologie, sowie auch durch Maßnahmen zur angepassten Organisation, sowie schließlich auch durch individuelle Qualifizierung des Personals erreichbar ist.

Die Maschinennutzung kann in einem Overall Equipment Effectiveness (OEE-) Report abgebildet werden. Hierbei wird auf eine automatische Betriebsdatenerfassung zurückgegriffen.

Hierzu ist aus der DE 10 2006 027 092 A1 ein Verfahren zur Betriebsdatenerfassung an in der Druckindustrie eingesetzten Maschinen bekannt. Das Verfahren kann an Druckmaschinen durchgeführt werden, wobei dort an eine Steuerungseinrichtung bzw. eine Betriebsdatenerfassungseinrichtung während des Betriebs Maschinendaten übermittelt werden. Aus den Maschinendaten wird dann automatisiert ein Zeitgerüst für die Betriebsdatenerfassung generiert, so, dass aus den Maschinendaten über die Betriebszeit der Maschine einerseits Maschinenaktivitätszeitintervalle und andererseits Maschinenstillstandszeitintervalle abgeleitet werden können. Den dabei ermittelten Maschinenstillstandszeitintervallen werden dann Stillstandsgründe automatisiert zugeordnet.

Weiterhin ist aus der DE 10 2010 09 063 A1 ein System zur Verbesserung von Produktionsprozessen bekannt. Das System ist mit einem Rechner zur Anzeige der Produktionsleistung beispielsweise einer Druckmaschine im Vergleich mit der Produktionsleistung anderer gleichartiger Druckmaschinen versehen. Die Druckmaschinen sind über eine Netzwerkverbindung mit einem Rechner zur Durchführung eines Leistungsvergleichs verbunden. Das System ist dabei so eingerichtet, dass zumindest dem Betreiber einer der Druckmaschinen über die Anzeige des Rechners zur Anzeige der Produktionsleistung Vergleichsdaten des vorher genannten Rechners für den Leistungsvergleich angezeigt werden.

Weiterhin ist aus dem Zeitschriftenartikel "Druckzentrum mit neuen Trainingsprogrammen, DD-SERIE DEMO-CENTER, Teil 5" in Deutscher Drucker Nr. 7 /24.2.2011, Seite 21 bekannt, dass Trainingsprogramme vorgesehen werden sollen. So soll es unter dem Titel "Top-Performer" ein eigenes Angebot für besonders qualifizierte und leistungsstarke KBA-Anwender geben. Es soll sie in die Lage versetzen, noch mehr aus ihren Maschinen heraus zu holen.

Aufgabe der Erfindung ist es die Nutzung der Einrichtungen einer Druckerei mit Bogenrotationsdruckmaschinen zur verbessern, ohne auf zusätzlich einzurichtende aufwändige technische Maßnahmen zurückgreifen zu müssen.

Gelöst wird diese erfindungsgemäße Aufgabe durch die Merkmale des Patentanspruches 1. Sinnvolle Weiterbildungen ergeben sich aus den Unteransprüchen.

Das erfindungsgemäße Verfahren zeichnet sich durch ein Auswertungsverfahren zur Ermittlung des Effektivitätsgrades der technischen Gegebenheiten von vorhandenen Einrichtungen in Relation zu Art und Größe des Auftragsbestandes und zusätzlich zu dem Nutzungspotential des Bedienpersonals aus.

In diesem Zusammenhang sind die Begriffe Effektivität und Effizienz von Bedeutung. Die erfindungsgemäß vorgeschlagenen Betrachtungsweisen eines Unternehmens oder einer Unternehmenseinheit der Druckindustrie, wie vorzugsweise einer Bogenoffsetdruckerei, im Hinblick auf die dort angewendeten Technologien, der ausgeführten Organisation und der Kompetenz des eingesetzten Personals in setzt zunächst bei deren Effektivität an.

Effektivität → bezeichnet einen Zielerreichungsgrad als Verhältnis eines erreichten Zieles zu einem hierzu definierten Ziel.

Daher ist es notwendig, zunächst zu bestimmen, wo und wodurch es Abweichungen zwischen einem technisch erreichbaren Produktionsziel und dem dann tatsächlich erwirtschafteten Produktionsergebnis gibt.

Natürlich hat die Effektivität der Produktion eindeutige und bewertbare Auswirkungen auf die Effizienz des Einsatzes der Produktionsmittel, da sich dort wo Ziele verfehlt werden, der Aufwand im Vergleich zum erzielten Ergebnis als zu hoch darstellt, es wird nicht wirtschaftlich gearbeitet.

Effizienz: → Wirtschaftlichkeit als Verhältnis zwischen einem erreichten Nutzen und dem hierfür notwendigen Aufwand

Der Aufwand kann aber nicht nur aus technischer Sicht in rein quantitativen Größen, wie Größe einer Produktionsmaschine, Arbeitszeiten oder Arbeitsgeschwindigkeiten bemessen werden, da auch die fehlerhafte Umsetzung von Produktionsplanungen und der fehlerhafte der Einsatz der Produktionsmittel die Effizienz reduzieren.

Erfindungsgemäß wird daher ein Verfahren mit ersten Schritten für die Auswertung von verschiedenen Daten, die die Verwendung der Produktionsmittel kennzeichnen, in Relation zueinander vorgeschlagen, auf die dann weitere Schritte zur Anpassung der Prozesse in Abhängigkeit von Produktionsparametern ermittelt werden.

Ziel der erfindungsgemäßen Verfahrensmaßnahmen ist also die gezielte Steigerung der Gesamteffektivität der Prozesse in einer Druckerei als Resultat der Effektivitätssteigerungen, die sich aus den ermittelten Maßnahmen einstellen. Demgemäß wird in dem Unternehmen oder der Unternehmenseinheit die Effizienz gesteigert.

Das zu diesem Zweck erfundene Verfahren wird im Folgenden an Hand von grafischen Darstellungen näher erläutert.

Dabei zeigen

Figur 1    ein Diagramm zu einer Soll-Ist-Auswertung und

Figur 2    eine Bewertungsmatrix.

Die Analyse des Effektivitätsgrades eines Unternehmens oder einer Unternehmenseinheit der Druckindustrie, wie vorzugsweise einer Bogenoffsetdruckerei, wird erfindungsgemäß in verschiedenen Verfahrensschritten durchgeführt.

Dazu werden folgende Verfahrensstufen zur Ermittlung von Bewertungskriterien vorgeschlagen, aus denen Verbesserungsmaßnahmen abgeleitet werden:

(A) Produktionsdatenanalyse

→ Produktivitätsreports mit originären Maschinendaten

(B) Performance-Check

→ Analyse in den Bereichen Technologie, Organisation sowie Personal mit einem detaillierten Stärken-/Schwächenprofil und Vorschlägen zur Produktivitätssteigerung

(C) Einrichten von Produktionsparametern

→ Best mögliche Korrektur von Abläufen und Einstellungen direkt an der Druckmaschine

(D) Einrichten von Produktionsmitteln

→ Kalibrierung von Vorstufe und Druck mit einem Verfahren zur nachhaltigen Reduzierung von Rüstzeiten und Makulatur

(E) Einrichten der Prepress-Organisation

→ Best mögliche Abstimmung von eingesetzter Vorstufentechnologie und Erhöhung der Prozesssicherheit in der Anbindung zur Druckmaschine

(F) Einrichten des Produktionsprozesses

→ Schlanke Produktion mit Instrumenten zur Optimierung des gesamten Workflows in einer Druckerei inklusive der Logistik

(G) Anpassung der Personalkompetenz

→ Verfahren zur Ermittlung eines aktuell abgestimmten Qualifizierungsbedarfs des Druckereipersonals

(H) Umsetzung der Anpassungen im Management

→ Schulung für die Betriebsleitung zur erfolgreichen Umsetzung und Nutzung der vorgenannten Maßnahmen als Führungsinstrument

Zur Erfassung von Bewertungskriterien werden zunächst die Einflussfaktoren auf die Leistungsfähigkeit einer Druckerei festgelegt, wobei die Leistungsfähigkeit als Leistungsziffer Z bezeichnet wird, die einem Effektivitätsgrad entspricht. Die Leistungsfähigkeit der Druckerei stellt sich in einfachster Betrachtungsweise im Nutzungsgrad der technischen Einrichtungen in Bezug auf den dabei realisierten Produktionsausstoß dar. Die Leistungsziffer Z wird anhand von Daten ermittelt, die sich aus Messwerten zu Rüstzeiten, Produktionszeiten und Stillstandszeiten ergeben.

Die Messdaten werden für alle Produktionsaufträge des Produktionsportfolios der Druckerei erfasst und stellen so alle Situationen der Nutzung dar und geben dadurch Anhaltspunkte für den jeweils auftretenden Nutzungsgrad wieder.

Als wesentliche Faktoren für die Beeinflussung des die Leistungsziffer Z beeinflussenden Nutzungsgrades sind eine technische Ausstattung als Technologie T, eine Personalausstattung hinsichtlich deren Qualifikation als Personal P und die organisatorische Verfassung als Organisation O der Druckerei zu nennen.

Diese als Effektivitätsfaktoren bezeichneten Faktoren T, O und P wirken sich unterschiedlich und kombiniert auf die Leistungsziffer Z aus.

Die Technologie T wirkt sich vorzugsweise gemeinsam mit der Organisation O auf die anfallenden Rüstzeiten aus.

Die Organisation O wirkt sich vorzugsweise gemeinsam mit dem Personal P auf die Produktionszeiten aus.

Die Organisation O wirkt sich aber auch gemeinsam mit dem Personal P stark auf die Stillstandszeiten aus.

Selbstverständlich haben Organisation O und Personal P auch einen sichtbaren Einfluss auf die Produktionszeiten, die weiterhin im Wesentlichen durch Art und Umfang der eingesetzten Technologie T geprägt werden.

Hier liegen Erfahrungswerte vor, in welchem Umfang und mit welchem Effekt diese Beeinflussungen stattfinden. Wichtig ist nun festzustellen, wie effektiv Technologie T, Personal P und Organisation O der Druckerei im gegebenen Umfeld arbeiten, um die Leistungsfähigkeit als Leistungsziffer Z beschreiben zu können.

Wenn festgestellt werden kann, wie die Effektivität der Technologie T, Personal P und Organisation O der Druckerei sich gestalten, kann die Leistungsziffer Z als einfaches Produkt der anteiligen Faktoren ausgedrückt werden.

Sind also alle Faktoren T, O und P mit 100% anzusetzen, dann ergibt sich auch eine Leistungsziffer Z für die Druckerei mit 100%.

Sind aber geringere Effektivitätswerte anzusetzen, z.B.

- bei der Technologie T (in Bezug auf die zu erbringende Auftragsstruktur mit Art, Umfang und Zeitabhängigkeit der Aufträge) nur 90%,
- beim Personal P (in Bezug auf Ausbildungsstand, Erfahrungswerte, Personenzahl etc.) nur 70% und
- bei der Organisation O (in Bezug auf Planung, Mittel und Durchführung der abzuwickelnden Aufträge) nur 50%

dann ergibt sich daraus die Leistungsziffer Z der Druckerei als

$$T=90\% \times P=70\% \times O=50\% \rightarrow Z=31,5\%$$

Die Gesamteffektivität der Druckerei ist also in diesem Beispiel trotz recht guter Ausstattung der Technologie T auf einem relativ niedrigen Stand.

Die Bewertung der Technologie T kann auf relativ einfache Weise im Zusammenhang der zu verarbeitenden Aufträge mit der vorhandenen maschinellen Ausstattung nach Alter, Funktionalität und Leistungsfähigkeit ermittelt werden.

Hierbei spielt die Ausstattung des Maschinenparks im Hinblick auf die auszuführenden Druckaufträge die größte Rolle. Im Idealfall kann bei entsprechender technischer Ausstattung ein Druckauftrag in einem Druckdurchgang auf einer integriert konfigurierten Druckmaschine ausgeführt werden. Im negativen Grenzfall sind mehrere Verarbeitungsdurchgänge z.B. für das Drucken, Veredeln und Weiterverarbeiten auf verschiedenen Maschinen notwendig.

Hieraus ergibt sich anhand der Auftragsstruktur in Bezug auf die maschinelle Ausstattung unmittelbar ein konkret ermittelbarer Wert T.

Die Bewertung der Organisation O wird durch Beobachtung der Betriebsabläufe und einer daraus abgeleiteten statistische Bewertung der Betriebsabläufe im Hinblick auf die Hilfszeiten für die Bereitstellung von Materialien und die logistischen Prozesse bei der Auftragsabwicklung durchgeführt. Aus den hierbei festgestellten Werten kann unmittelbar ein konkreter Wert O ermittelt werden.

Besonders wichtig ist die Bewertung des Personals P hinsichtlich seiner Kompetenz für die gestellten Aufgaben hinsichtlich einer gegebenen technischen Ausstattung und von damit zu erledigenden Aufgaben. Hier kommen Auswertungsmethoden zum Einsatz, die sowohl eine Fremdeinschätzung des Managements als auch eine Selbsteinschätzung des Maschinenpersonals einbeziehen. Die Einschätzungen werden dabei auf die jeweils gestellten Aufgaben bezogen und an einem für eine best mögliche Nutzung der gegebenen technischen Ausstattung vorauszusetzenden Wert gemessen. Daraus wiederum ergibt sich eine Aussage zur Bildung eines konkreten Wertes P.

Dazu wird als Grundkonzept ein persönliches Kompetenzprofil (Printer Competence Profile) PCP vorgeschlagen.

Für den Produktionsleiter ist beispielsweise folgendes zu ermitteln:

Ansatz des PCP ist, Leitern von Produktionseinheiten die Fähigkeit zu vermitteln, den Qualifikationsstand Ihrer Mitarbeiter zu erkennen und ihn im Hinblick auf definierte Zielsetzungen effizient weiter zu entwickeln.

Für den Druckereimitarbeiter ist beispielsweise folgendes zu ermitteln:

Weiterer Ansatz des PCP ist, den Qualifikationsstand als Mitarbeiter festzustellen, Defizite am jeweiligen Arbeitsplatz zu erkennen und ihn im Hinblick auf definierte Zielsetzungen effizient weiter zu entwickeln.

Als Konsequenz kann zur Umsetzung einer nachhaltigen Entwicklung des Druckereipersonals ein Trainings-Konzept umgesetzt werden, das den Erfolg von Qualifizierungsmaßnahmen sichert, da erfasste Defizite bereits erkannt wurden und sich der Erfolg nach einer Maßnahme danach sofort in der täglichen Praxis zeigt.

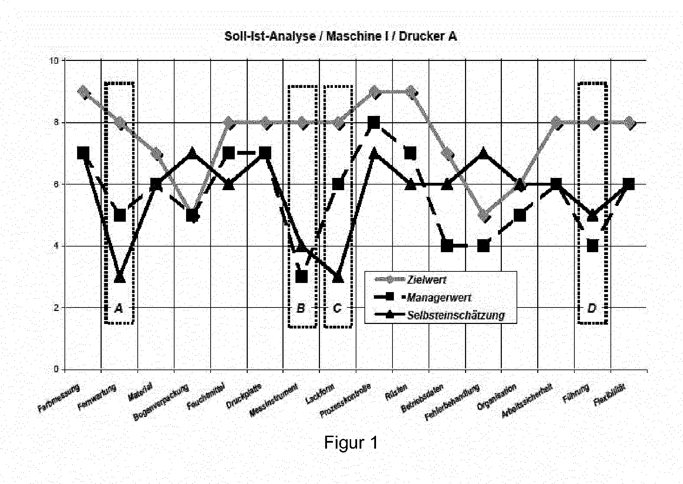

In Figur 1 ist in Qualifikationsprofil eines Druckers dargestellt. Hierbei sind in einer ersten Datenlinie, deren Datenpunkte als Raute dargestellt sind, die Anforderungen für bestimmte Tätigkeiten in Bezug auf eine bestimmte Druckmaschine mit bestimmter Ausstattung als Maßzahlen angegeben. Das Niveau dieser Anforderungen richtet sich in den Maßzahlen grundsätzlich an der technischen Ausstattung der Druckmaschine aus und ist auf alle wesentlichen Anwendungsbereiche der Produktionseinrichtung bezogen.

Eine zweite Datenlinie, deren Datenpunkte als Quadrat dargestellt sind, zeigt demgegenüber Maßzahlen zur Effektivität der Umsetzung der gegebenen technischen Möglichkeiten durch das Druckpersonal aus der aktuellen Einschätzung des Druckereimanagements an.

Eine letzte Datenlinie, deren Datenpunkte als Dreieck dargestellt sind, zeigt schließlich noch Maßzahlen zur Effektivität der Umsetzung der gegebenen technischen Möglichkeiten durch das Druckpersonal aus einer aktuellen Selbsteinschätzung des Druckpersonals an.

Aus der Gesamtschau ergibt sich dann, dass in den bestimmten Bereichen größere Defizite hinsichtlich des Qualifikationsstandes des Druckpersonals in seiner aktuellen Arbeitsumgebung gesehen werden können. Diese sind in Figur 1 beispielhaft mit A, B, C und D bezeichnet. Damit sind konkrete Hinweise auf die notwendigen Maßnahmen zur Verbesserung im Bereich Personal P gegeben. Diese Bewertung wird sinnvoll auf alle Mitarbeiter des Druckpersonals angewendet.

Es gilt aber in größerem Umfang zu entscheiden, auf welcher Basis die Leistungsfähigkeit in Bezug auf die auszuführenden Aufträge verbessert werden kann, wobei der aktuelle Leistungsstand der Druckerei ermittelt werden muss.

Hierzu ist also zunächst zu ermitteln, wo der entscheidend wirksame Verbesserungsbedarf anzusiedeln ist.

Daher werden die oben genannten Effektivitätsfaktoren mit den folgenden weiteren in jeder Druckerei als messbaren vorhandenen Faktoren verknüpft, die als Produktionsfaktoren bezeichnet werden können.

Ein Verfügbarkeitsfaktor V stellt dar, wie sich Produktionszeit und Rüstzeiten im Verhältnis zur Betriebszeit darstellen.

Ein Leistungsfaktor L stellt dar, wie sich das Verhältnis von tatsächlichem Output zum Soll-Output an Produkten darstellt.

Ein Qualitätsfaktor Q stellt dar, wie sich das Verhältnis von Netto-Produkten (Gutbogen) zu Brutto-Produkten (insgesamt produzierte Bogen) darstellt.

Diese Produktionsfaktoren sind relativ einfach in einer Druckerei zu ermitteln, da in aller Regel eine Betriebsdatenerfassung BDE vorhanden ist, die mit Erfassungsmitteln für Zeiten und Produkte an den Produktionsmaschinen und in der Organisation der Druckerei verankert ist. Als einfaches Produkt aus diesen Werten ergibt sich dann ein Faktor OEE (Overall Equipment Effectiveness), der die Produktivität einer Produktionsmaschine darstellt.

| | | |
|---|---|---|
| Verfügbarkeitsfaktor V | → | Druckproduktionszeit plus Rüstzeiten im Verhältnis zur gesamten Betriebszeit |
| X | | X |
| Leistungsfaktor L | → | Verhältnis von tatsächlichem Output an Druckpro-dukten zum Soll-Output |
| X | | X |
| Qualitätsfaktor Q | → | Verhältnis von Netto-Druckbogen (Gutbogen) zu Brutto-Druckbogen (produzierte Bogen) |
| = | | = |
| OEE | → | Produktivität der Druckereimaschine (z.B. Bogen-offsetdruckmaschine oder Maschinengruppe) |

Zur Ermittlung der Faktoren können z.B. folgende Arbeitsvorgänge bewertet werden:

- Plattenwechsel (nach Zeit, Menge)

- Rüstvorgänge (nach Zeit)
- Produktionsabläufe (nach Zeit, Menge)
- Wasch-/Reinigungsabläufe (nach Zeit)
- Maschinenstillstände (nach Zeit)
- Produktionstopps / Anlaufzyklen der Maschinen
- Makulatur in den Produkten (nach Menge)

Hierzu stehen folgende in Druckereien ermittelten Messdaten zur Verfügung:

- Zeitdaten für Produktionsschichten
- Alarmmeldungen der Druckmaschine
- Bude-Eingaben aus der Steuerung der Druckmaschine
- Angaben zum Auftrag aus der Organisationssoftware der Druckerei
- Daten zu erforderlichen Produktionsmaterialien wie Bedruckstoffe, Hilfsstoffe, Druckfarben aus dem Beschaffungsmanagement

Mit diesen und ggf. weiter verfügbaren Daten kann über einen bestimmten Zeitraum der Faktor OEE mit seinen Teilfaktoren Verfügbarkeitsfaktor V, Leistungsfaktor L und Qualitätsfaktor Q ermittelt werden.

Diese gespeicherten Daten werden in dem erfindungsgemäßen Verfahren zu regelmäßigen Reports mit Trendanzeigen für die Beurteilung der Effektivitätsdaten der Druckereieinrichtungen verarbeitet.

Um diese Faktoren quasi normiert darstellen zu können und um der Druckerei eine guten Ausgangspunkt für eine gute Produktionsleistung zu ermöglichen, ist es sinnvoll die Druckereieinrichtungen auf einen technisch besten Stand zu bringen.

Die erfolgt in wenigstens drei Schritten:

I. Kalibrierung der Druckwerke

■ Abdruck des ersten Druckwerks mittels einer spezifischen Rasterfläche
■ Einstellen der best möglichen Feuchtmittelführung (Schmiergrenze)
■ Abdruck aller übrigen Druckwerke mit den gleichen Parametern
■ Spezifizierte Einstellungen aller Kennlinien zur Maschinensteuerung
■ Best mögliche Einrichtung eines Maschinenpassers für einen ersten auszuführenden Druckabzug
■ Angepasste und reproduzierbare Einstellung der Bogenlaufparameter an verschiedene Produktionsbedürfnisse

II. Optimierung von Prepress / Press Daten-Workflow über CIP3 / JDF-Daten

III. Kalibrierung der Farbvoreinstellung anhand der CIP3 / JDF-Daten

Hinsichtlich der Optimierung einer Prepress-Organisation für die Bereitstellung von optimal an die Produktionsbedürfnisse angepasstem Material sind folgende Parameter zu berücksichtigen.

I. Überprüfen der Arbeitsschritte in einem Prepress Leitfaden:

- Datenannahme für Plattenerstellung
- Text -/ Bildbearbeitung anwenden
- Layout erstellen
- Ausschießen / Auslegen
- Workflow / PS / PDF-Daten
- Software Versionen
- Hardware Voraussetzungen schaffen und pflegen
- Datensicherung organisieren mit Datenarchivierung
- Qualitätssicherung organisieren mit Datensicherung- und -archivierung
- Auftragsablauf konzipieren und konsistent halten

II. Sicherstellen der Produktionsqualität im Vorfeld:

- Proof nach Standard (PSO) dürfen

- Einstellungen für Farbauftragsinformation (CIP3) erstellen und pflegen
- Raster / Auflösung justieren
- Belichtungsqualität prüfen
- Qualitätsmanagement organisieren
- Messtechnik bereithalten, überwachen und pflegen
- Verwendete Materialien planen (Farbe, Papier, Druckplatten, ...)

III. Anpassen der Schnittstelle Prepress / Druckprozess:

- Sicherstellen der korrekten Auftragsdaten
- Anpassen der Farbauftragsinformation
- Kalibrieren von Funktionen für schnellen Farbwechsel
- Herstellen des höchstmöglichen Automatisierungsgrades
- Standardisierung (PSO) einrichten und sichern
- Stabilität für die Plattenerstellung sichern
- Entwicklungsmaschine, Einbrennofen, Plattenstanzung

Zur Bewertung des Verbesserungsbedarfs hinsichtlich der Effektivität in einer Druckerei werden nun die zuvor ermittelten Faktoren

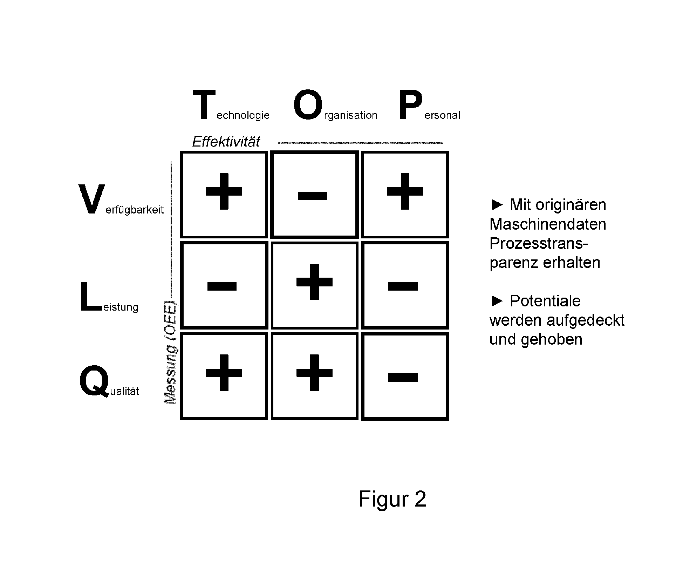

→ Technologie T, Personal P und Organisation O einerseits und
→ Verfügbarkeitsfaktor V, Leistungsfaktor L und Qualitätsfaktor Q andererseits in einer Performance-Matrix nach Figur 2 miteinander verknüpft.

Aus den anhand gemessener Werte ermittelten Faktoren V, L, Q und den hinsichtlich der Qualifikation der Druckerei mit deren technischer Einrichtung, Organisation und Personal ermittelten Effektivitätsfaktoren T, O, P ergibt sich dabei auf einfache Weise eine Darstellung dafür, wo ein konkreter Bedarf im Hinblick auf notwendige Verbesserungen anzusetzen hat. Jede Verknüpfung in der Matrix ergibt dabei einen eigenen Effektivitätsstatuswert. Diese Effektivitätsstatuswerte stellen sich als dezidierte Werte oder Trendfaktoren dar.

In einem willkürlich ausgewählten Beispiel einer Performance-Matrix nach Figur 2 sind Trendfaktoren gewählt worden, die hier als Pluszeichen und Minuszeichen dargestellt sind.

Im Beispielfall nach Figur 2 kann zur Effektivitätsbetrachtung der Druckerei, mit der gegebenen technischen Ausrüstung, der erfassten Organisation und dem bewerteten Personal Folgendes gesagt werden.

a) die Verfügbarkeit V hat hinsichtlich der Technologie T eine positive Ausprägung, da die Aufträge mit der vorhandenen Technik sicher ausgeführt werden können, so dass in diesem Fall kein akuter Verbesserungsbedarf zu sehen ist.

b) die Verfügbarkeit V hat hinsichtlich der Organisation O eine negative Ausprägung, da die Aufträge mit der vorhandenen Technik nicht immer optimal ausgeführt werden können, so dass hier ein akuter Verbesserungsbedarf im Hinblick auf organisatorische Abläufe zu sehen ist.

c) die Verfügbarkeit V hat hinsichtlich des Personals P eine positive Ausprägung, da die Aufträge mit der vorhandenen Technik vom vorhandenen Personal sicher ausgeführt werden können, so dass hier kein akuter Verbesserungsbedarf zu sehen ist.

d) der Leistungsfaktor L hat hinsichtlich der Technologie T eine negative Ausprägung, da die Aufträge mit der vorhandenen Technik nicht sicher im Hinblick auf die benötigte Zeit und den erwarteten Ausstoß ausgeführt werden können, so dass in diesem Fall ein akuter Verbesserungsbedarf bei der technischen Ausstattung zu sehen ist.

e) der Leistungsfaktor L hat hinsichtlich der Organisation O eine positive Ausprägung, da die Aufträge mit der vorhandenen Technik meist gut organisiert ausgeführt werden können, so dass hier kein akuter Verbesserungsbedarf zu sehen ist.

f) der Leistungsfaktor L hat hinsichtlich des Personals P eine negative Ausprägung, da die Aufträge mit der vorhandenen Technik vom vorhandenen Personal nicht immer sicher ausgeführt werden können, so dass hier ein akuter Verbesserungsbedarf beim Einsatz und der Qualifikation des Personals zu sehen ist.

g) der Qualitätsfaktor Q hat hinsichtlich der Technologie T eine positive Ausprägung, da die Aufträge mit der vorhandenen Technik meist sicher im Hinblick auf die erzielten verkaufbaren Produkte ausgeführt werden können, so dass in diesem Fall kein akuter Verbesserungsbedarf bei der technischen Ausstattung zu sehen ist.

h) der Qualitätsfaktor Q hat hinsichtlich der Organisation O eine positive Ausprägung, da die Aufträge meist gut organisiert und in guter oder hoher Qualität der verkaufbaren Produkte ausgeführt werden können, so dass hier kein akuter Verbesserungsbedarf zu sehen ist.

i) der Qualitätsfaktor Q hat hinsichtlich des Personals P eine negative Ausprägung, da die Aufträge mit der vorhandenen Technik vom vorhandenen Personal nicht immer im Hinblick auf verkaufbare Produkte ausgeführt werden können, so dass hier ein akuter Verbesserungsbedarf beim Einsatz und der Qualifikation des Personals zu sehen ist.

Die Werte der Matrix gemäß Figur 2 werden nunmehr zur Verarbeitung in einem zentralen Steuerungssystem der Druckerei datenmäßig übertragen und entsprechend zu der Matrix dargestellt. Dieses Steuerungssystem beinhaltet einen Speicher, dem die aus der Datenerfassung der Druckerei ermittelten und durchkalkulierten Werte zu den Produktionsfaktoren V, L und Q zugeführt werden. Weiterhin werden diesem Speicher die Werte der aus einer Datenerhebung ermittelten Effektivitätsfaktoren T, O und P zugeführt.

Die Ermittlung der Effektivitätsfaktoren ist dabei nachzuhalten, so dass diese möglichst ständig auf einem aktuellen Stand sind. Diese sind letztlich ständig von der Entwicklung der Technologie T hinsichtlich der maschinellen Ausstattung, von dem jeweiligen Stand der Organisation O hinsichtlich der betrieblichen Abläufe und von der jeweiligen Entwicklung im Personal P abhängig von dem Stand der Qualifikation des Bedienungspersonals abhängig.

Die in dem Speicher hinterlegten Faktoren T, O, P und V, L, Q werden in der Matrix anhand von normierten Werten miteinander verknüpft, so dass sich für jedes Feld der Matrix ein ausgeprägter Wert ergibt. Die Verknüpfung wird in sinnvoller Weise abhängig von der Unternehmensstruktur, Unternehmensgröße, Auftragsstruktur, Personalstärke und Maschinenausstattung unterschiedlich bewertend ausgeführt sein. Jedem Feld der Matrix wird dann ein Schwellwert zugeordnet, der mit dem ausgeprägten Wert der Verknüpfung verglichen wird.

Je nach Über- oder Unterschreitung der Schwellwerte kann dann eine positive oder negative Ausprägung der jeweiligen Bewertungssituation T/V, T/L, T/Q, O/V, O/L, O/Q, P/V, P/L und P/Q ausgegeben werden.

Damit werden die Grundlagen zu Präferenzen bzw. Notwendigkeiten für Maßnahmen zur effizienteren Gestaltung der Ausstattung, des Personaleinsatzes und der Organisation des jeweiligen Betriebes ausgegeben.

Daraus werden folgende Maßahmen abgeleitet:

I. Darstellung der Gesamtanlageneffektivität

■ Optimierung der Produktions- und Supportprozesse
■ Optimierung der Druckereimaschine (Bogenoffsetdruckmaschine)
■ Verlaufsaufzeichnung und Trendanzeige der Effektivitätskennzahlen
■ Erfolgskontrolle zu den aus der Effektivitätsbewertung abgeleiteten und durchgeführten Verbesserungsmaßnahmen

II. Beratung zur Leistungssteigerung

■ Regelmäßige Beratung (monatlich) durch geschulte Spezialisten
■ Detaillierte Analyseprotokolle der erfassten Betriebs- und Produktionsdaten
■ Ausnutzung des Aggregatepotenzials wird überprüft
■ Unterstützung beim internen KVP (kontinuierlicher Verbesserungsprozess)
■ Objektive Darstellung einer Leistungsbeurteilung mit auf Maschinentypen neutralisiertem Benchmark

III. Planungssicherheit

■ Dokumentation von Daten zu den Rüstzeiten und den Produktionszeiten im Zusammenhang der Produktionsaufträge
■ Dokumentation der zur Produktion anfallenden Makulatur
■ Überprüfung der Sollvorgaben für Produktion und Support
■ Leistungsvergleich unterschiedlicher/gleicher Druckproduktionsaufträge
■ Mehr Planungssicherheit und dadurch bessere Gesamtauslastung

IV. Minimierung von Störungen

■ Frühzeitige Lokalisierung von Maschinendefekten oder Wartungsbedarf
■ Produktionsunterbrechungen werden durch frühzeitige Erkennung von Schwachstellen planbar gemacht
■ Entwicklung eines Instandhaltungskonzeptes

Aus der beispielhaft in Figur 2 dargestellten Matrix ergibt sich dann eine Reihe von Maßnahmen, die zu Verbesserungen bei der Technologie T, der Organisation O und dem Personal P führen sollen, um die Leistungsziffer Z der Druckerei zu verbessern.

In Verbindung damit kann eine Druckerei ihre Leistungsfähigkeit nach verschiedenen Gesichtspunkten bewerten und verbessern:

I. Zukunftssicherung durch Ermittlung der Sicherheit des Umfeld für künftige Auftragsarten und Produktstrukturen
II. Generelle Rüstzeitreduzierung
III. Prozessintegration durch zusätzliche Produktionsmethoden
IV. Ausrichtung an Anforderungen hinsichtlich Ökologie
V. Höhere Leistung durch Serviceverbesserung
VI. Technische Aufrüstung zur Leistungssteigerung
VII. Vereinfachung, Verbesserung und Sicherung der Beschaffung von Verbrauchsmaterialien für sichere Produktionsabläufe und hohe Qualität
VIII. Produktionsbegleitung durch Spezialisten zur Prozessoptimierung
IX. Einrichtung und Ausbau von Daten-Workflows
X. Einrichtung und Optimierung einer Material- und Druckerei-Logistik
XI. Minimierung von Stillstandszeiten durch Fernwartung

## Patentansprüche

1. Verfahren zur Verbesserung von Prozessen bei der Verarbeitung von Bedruckstoffen und Druckerzeugnissen in einer Druckerei, bei der Herstellung von bogenförmigen Druckerzeugnissen in Bogendruckmaschinen,
   wobei Datenwerte als Effektivitätsdaten der Nutzung einer technischen Ausstattung (T) in Bezug auf die Produktionsstruktur,
   wobei weiterhin Datenwerte als Effektivitätsdaten zur organisatorischen Situation (O) der Druckereieinrichtung in Bezug auf dieselbe Produktionsstruktur und wobei weiterhin Datenwerte als Effektivitätsdaten zu einem Qualifikationsstatus (P) des Druckpersonals in Bezug auf dieselbe Produktionsstruktur ermittelt werden,
   wobei weiterhin Produktionsdaten der Druckereieinrichtung ermittelt werden, die als Messdaten zur Verfügbarkeit (V) der technischen Ausstattung, zur Leistung (L) der Druckereieinrichtung im Vergleich zwischen geplanter und tatsächlich ausgeführter Produktion und zur Qualität (Q) der Produktion im Vergleich von produzierten Produkten und verkaufbaren Produkten bereitgestellt werden,
   wobei weiterhin die Effektivitätsdaten (T, O, P) und die Produktionsdaten (V, L, Q) miteinander verknüpft werden und wobei aus jeder der Verknüpfungen von Effektivitätsdaten (T, O, P) und Produktionsdaten (V, L, Q) ein jeweils eigener Effektivitätsstatuswert ausgegeben wird.

2. Verfahren nach Anspruch 1, **gekennzeichnet dadurch,**
   **dass** als Effektivitätswerte ein Wert für Technologie (T), ein Wert für Organisation (O) und ein Wert für Personalqualifikation (P) durch Bewertung je eines entsprechend aktuellen Status in der Druckereieinrichtung in Relation zu den gestellten Anforderungen durch ein Produktionsportfolio ermittelt werden.

3. Verfahren nach Anspruch 2, **gekennzeichnet dadurch,**
   **dass** die Werte für Technologie (T), für Organisation (O) und für Personal (P) zu einem Wert für eine Leistungsziffer (Z) der Druckereieinrichtung verknüpft werden.

4. Verfahren nach Anspruch 1, **gekennzeichnet dadurch,**
   **dass** als Produktionswerte ein Wert für Verfügbarkeit (V), ein Wert für Leistung (L) und ein Wert für Qualität (Q) aus Messdaten ermittelt werden, die in der Druckereieinrichtung während der Durchführung von Produktionsaufträgen eines Produktionsportfolios erfasst wurden.

5. Verfahren nach Anspruch 4, **gekennzeichnet dadurch,**
   **dass** die Werte für Verfügbarkeit (V), für Leistung (L) und für Qualität (Q) zu einem Wert OEE für die Produktivität der technischen Ausstattung verknüpft werden.

6. Verfahren nach Anspruch 1 bis 5, **gekennzeichnet dadurch,**
**dass** die Effektivitätswerte (T, O, P) und die Produktionswerte (V, L, Q) in einem Datenspeicher eines zentralen Steuerungssystems abgelegt werden, dass jeder der Effektivitätswerte (T, O, P( in einer Matrix mit jedem der Produktionswerte (V, L, Q) durch eine Rechenvorschrift oder eine Kennlinie zu einem aktuellen Statuswert verknüpft wird, **dass** zu jeder Verknüpfung ein Schwellwert im Datenspeicher hinterlegt wird, dass ein Vergleich zwischen den Statuswerten und den Schwellwerten jeder Verknüpfung ausgeführt wird und **dass** bei Abweichungen der Statuswerte von den Schwellwerten Effektivitätsstatuswerte ausgegeben werden.

7. Verfahren nach Anspruch 6, **gekennzeichnet dadurch,**
**dass** die Effektivitätswerte (T, O, P) sowie die Produktionswerte (V, L, Q) in einem Datenspeicher einer Steuerung abgelegt werden, die sich im Bereich einer Druckereisteuerung und/oder einer Maschinensteuerung / Maschinenleitstand befindet.

8. Verfahren nach Anspruch 6, **gekennzeichnet dadurch,**
**dass** die Effektivitätswerte (T, O, P) sowie die Produktionswerte (V, L, Q) in einem Datenspeicher einer Steuerung abgelegt werden, die sich außerhalb eines Bereiches einer Druckereisteuerung und/oder einer Maschinensteuerung/ Maschinenleitstand befindet.

9. Verfahren nach Anspruch 1 bis 8, **gekennzeichnet dadurch,**
**dass** Druckaufträge betreffende Daten in Verbindung mit den Effektivitätswerten (T, O, P) sowie den Produktionswerten (V, L, Q) mit Daten abgeglichen werden, die in Auftragsdaten, im Maschinenleitstand oder einer zentralen oder externen Datenbank, hinterlegt sind, wobei die Daten mit aus den Produktionsdaten gewonnenen Daten verglichen werden, wobei eine Meldung an den Bediener der Maschine oder die Druckereileitung ausgegeben wird, wenn ein nach aktuellem Stand kritischer Auftrag vorliegt.

10. Verfahren nach Anspruch 1 bis 9, **gekennzeichnet dadurch,**
**dass** es sich bei den Produktionsdaten um Qualitätsdaten handelt, die aus einem Bogeninspektionsgerät und/oder einer Farbregelanlage stammen, derart dass der Produktionsprozess hinsichtlich seiner Qualitätsempfindlichkeit bewertet wird.

11. Verfahren nach Anspruch 1 bis 9, **gekennzeichnet dadurch,**
**dass** es sich bei den Daten um Produktionsdaten handelt, die aus der Maschinensteuerung gewonnen werden und die Anlaufdaten, Fortdruckleistungen, Maschineneinstellungen und/oder Ort und Zeitpunkt von Produktionsunterbrechungen betreffen.

12. Verfahren nach Anspruch 1 bis 11, **gekennzeichnet dadurch,**
**dass** mittels der gespeicherten Daten automatisiert ein Fehlerprotokoll erstellt wird, wobei Bedruckstoffdaten und Produktionsdaten und Qualitätsdaten miteinander verknüpft werden.

13. Verfahren nach Anspruch 1 bis 12, **gekennzeichnet dadurch,**
**dass** aus dem Datenspeicher Daten von und zu einem Produktionsmanagementsystem übertragen werden und dass im Produktionsmanagementsystem Effektivitätsdaten aus den ermittelten Bedruckstoffdaten und Produktionsdaten und Qualitätsdaten berechnet werden.

Figur 1

**T**echnologie **O**rganisation **P**ersonal

*Effektivität*

**V**erfügbarkeit

**L**eistung

*Messung (OEE)*

**Q**ualität

| | T | O | P |
|---|---|---|---|
| V | + | – | + |
| L | – | + | – |
| Q | + | + | – |

► Mit originären
Maschinendaten
Prozesstransparenz erhalten

► Potentiale
werden aufgedeckt
und gehoben

Figur 2

Europäisches
Patentamt

European
Patent Office

Office européen
des brevets

**EUROPÄISCHER RECHERCHENBERICHT**

Nummer der Anmeldung

EP 12 16 7820

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 024031 A1 (ROLAND MAN DRUCKMASCH [DE]) 30. November 2006 (2006-11-30) * Zusammenfassung * * Absatz [0004] - Absatz [0009] * * Absatz [0012] * * Absatz [0018] - Absatz [0020] * * Absatz [0025] * ----- | 1-13 | INV. G06Q10/06 |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| Den Haag | 8. August 2012 | Moser, Raimund |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 16 7820

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-08-2012

| Im Recherchenbericht angeführtes Patentdokument | Datum der Veröffentlichung | Mitglied(er) der Patentfamilie | Datum der Veröffentlichung |
|---|---|---|---|
| DE 102005024031 A1 | 30-11-2006 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1939800 A1
- DE 102005009301 A1
- DE 102006027092 A1
- DE 10201009063 A1

**In der Beschreibung aufgeführte Nicht-Patentliteratur**

- Leistungsprozess in Druckereien steigern. *Druckspiegel,* 2010, vol. 3, 34-35
- Druckzentrum mit neuen Trainingsprogrammen, DD-SERIE DEMO-CENTER, Teil 5. *Deutscher Drucker,* 24. Februar 2011, vol. 5 (7), 21